# EUROPÄISCHE PATENTSCHRIFT

(11) **EP 3 837 122 B1**
(45) Veröffentlichungstag und Bekanntmachung des Hinweises auf die Patenterteilung: **19.04.2023**
(21) Anmeldenummer: 19749667.2
(22) Anmeldetag: 29.07.2019
(51) Int. Cl.: B60C 9/00, B60C 9/22, D07B 1/06, B60C 9/20

(54) **FAHRZEUGLUFTREIFEN**
PNEUMATIC TIRE FOR A VEHICLE
PNEUMATIQUE DE VÉHICULE

(30) Priorität: 16.08.2018 DE 102018213795
(43) Veröffentlichungstag der Anmeldung: 23.06.2021
(73) Patentinhaber: Continental Reifen Deutschland GmbH, 30165 Hannover (DE)
(72) Erfinder: MOURA, Tiago, 30165 Hannover (DE); KRAMER, Thomas, 30165 Hannover (DE); SCHUNACK, Michael, 30165 Hannover (DE)
(74) Vertreter: Continental Corporation
(86) Internationale Anmeldenummer: PCT/EP2019/070299
(87) Internationale Veröffentlichungsnummer: WO 2020/035292

(56) Entgegenhaltungen:
- EP-A1- 3 034 689
- DE-A1-102016 225 234

## Beschreibung

Die Erfindung betrifft einen Fahrzeugluftreifen in Radialbauart, insbesondere einen Nutzfahrzeugreifen, mit einem Gürtelpaket aus wenigstens drei Lagen, nämlich zwei Arbeitslagen und einer radial außen in Bezug auf die Arbeitslagen angeordneten Schutzlage, wobei die Schutzlage Festigkeitsträger aus einem oder mehreren miteinander verseilten Stahlfilamenten aufweist, wobei der Stahl der Stahlfilamente einer Festigkeitsklasse zuzuordnen ist.

Nutzfahrzeugreifen mit einem Gürtel, welcher zwei Arbeitslagen und eine Schutzlage aufweist, sind dem Fachmann bekannt.

Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage" oder "Schutzlage", abgedeckt. Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen typischerweise einen gleichen Winkel zwischen 15° und 30° in Bezug auf die Reifenumfangsrichtung auf, wobei die Stahlkorde der einen Arbeitslage gegenläufig zu den Stahlkorden der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung.

Die 4. Gürtellage hat die Funktion einer Schutzlage für die beiden darunter liegenden Arbeitslagen, indem sie eine Barriere für Steine oder andere Gegenstände darstellt, die durch das Laufstreifenpaket dringen könnten. Ohne die Schutzlage würden die Korde der Arbeitslagen wesentlich häufiger durch durchdringende Steine verletzt werden und verstärkt der Korrosion ausgesetzt sein, was am Ende die Traglast, die Haltbarkeit und die Runderneuerungsfähigkeit des Reifens reduzieren würde, soweit der Reifen runderneuerungsfähig ist.

Unter den Begriff "Nutzfahrzeugreifen" fallen ebenfalls sogenannte "Off the Road"-Reifen, welche beispielsweise für Baustellen, nicht asphaltierte Straßen oder Minengelände eingesetzt werden.

Die Stahlfilamente bestehen aus Stahl einer bestimmten Festigkeitsklasse. Die Zuordnung in eine Festigkeitsklasse anhand der von der Firma NV Bekaert SA veröffentlichten und nachfolgend aufgeführten Klassifizierung:

| Festigkeitsklasse | Zugfestigkeit (MPa) |
|---|---|
| NT | 3250 - 2000*d |
| HT | 3800 - 2000*d |
| ST | 3980 - 2000*d |
| UT | 4400 - 2000*d |

| | |
|---|---|
| d = Filament Durchmesser in mm | |

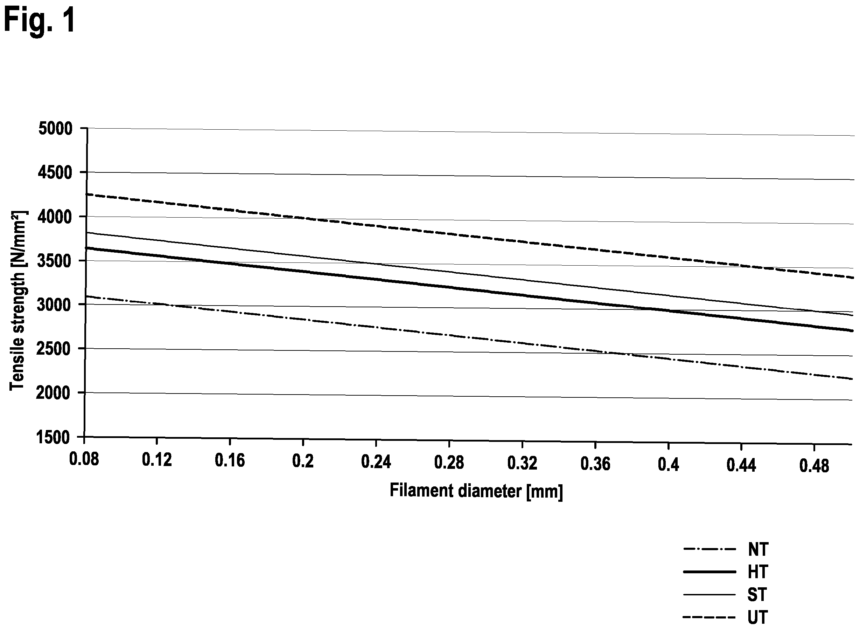

Zudem zeigt das Diagramm der Figur 1 den Zusammenhang von Zugfestigkeit und Filamentdurchmesser von jeder der vorgenannten vier Stahl-Festigkeitsklassen. Es ist ersichtlich, dass die Zugfestigkeit (Kraft pro Flächeneinheit) bei geringerem Durchmesser steigt.

Es ist zum Beispiel bekannt, für die Schutzlage Stahlkorde der Konstruktion 3 x 0,20 + 6 x 0,35 der Festigkeitsklasse HT zu verwenden. Dieser vorgenannte Stahlkord weist einen Kernstrang aus drei miteinander verdrehten Stahlfilamenten des Durchmessers von 0,20 mm auf, welche von 6 Filamenten des Durchmessers von 0,35 mm umgeben sind.

Weiterhin ist es bekannt, für die Schutzlage Stahlkorde der Konstruktion 1 x 0,40 + 5 x 0,40 zu verwenden. Dieser Stahlkord weist ein Kernfilament des Durchmessers von 0,40 mm auf, welcher von 5 Filamenten des Durchmessers von 0,40 mm umgeben ist. Die Stahlfilamente sind ebenfalls der Festigkeitsklasse HT zuzuordnen. Hierdurch ergibt sich ein Korddurchmesser von 1,20 mm und als gummierte Lage eine Dicke zwischen etwa 1,60 mm und 2,50 mm. Diese Korde sind in einer Dichte von 30 bis 60 ends per decimeter (epdm) in der Schutzlage angeordnet.

Aus der EP 3 034 689 A1 sind Stahlkorde für eine Schutzlage bekannt mit einer Konstruktion 1 + 4. Das Kernfilament weist einen Durchmesser von 0,22 bis 0,30 mm auf und die umgebenden 4 Filamente einen Durchmesser von 0,38 bis 0,45 mm. Hierbei liegt die Zugfestigkeit der Filamente zwischen 2800 bis 4000 N/mm².

In der WO 2018/095616 A1 werden in einer Gürtellage als Festigkeitsträger Stahl-Monofilamente verwendet, wobei der Stahl die Festigkeitsklasse UT mit einer Zugfestigkeit von 3185 N/mm² bis 3920 N/mm² aufweist.

Es kann vorkommen, dass die Festigkeitsträger der Schutzlage beim Abfangen der Steine brechen beziehungsweise dass Steine bzw. andere Gegenstände bis auf die Arbeitslagen durchstoßen, wodurch der Fahrzeugreifen in seiner Haltbarkeit sowie seiner Eignung zur Runderneuerung vermindert sein kann.

Man ist immer bestrebt, den Fahrzeugluftreifen hinsichtlich seiner Haltbarkeit zu verbessern und, wenn zusätzlich möglich, dessen Gewicht sowie dessen Herstellungskosten zu senken.

Der Erfindung liegt demnach die Aufgabe zugrunde, einen Nutzfahrzeugreifen der eingangs genannten Art mit einem wenigstens dreilagigen Gürtelpaket derart auszuführen, dass dessen Haltbarkeit verbessert ist.

Gelöst wird die Aufgabe erfindungsgemäß dadurch, dass jedes Stahlfilament des Festigkeitsträgers der Schutzlage den gleichen Filamentdurchmesser aufweist, wobei der Durchmesser (13) in einem Bereich von 0,30 bis 0,45 mm liegt, und der Stahl der Stahlfilamente der Festigkeitsträger der Schutzlage der Festigkeitsklasse ST oder einer höheren Festigkeitsklasse zuzuordnen ist, wobei die Festigkeitsklasse ST eine Zugfestigkeit in MPa von 3980-2000*d und die Festigkeitsklasse UT eine Zugfestigkeit in MPa von 4400-2000*d aufweist, wobei d der Durchmesser eines Stahlfilamentes in Millimetern ist.

Es ist ein Nutzfahrzeugreifen mit einem wenigstens dreilagigen Gürtel geschaffen, dessen Schutzlage hinsichtlich ihrer Funktion "Schutz" der unter ihr angeordneten Lagen bezüglich eindringender Steine oder anderer Gegenstände durch "Abfangen" dieser Steine oder anderer Gegenstände verbessert ist.

Die Stahl-Festigkeitsträger der Schutzlage des erfindungsgemäßen Reifens sind der Festigkeitsklasse ST oder höher zuzuordnen. Versuche haben gezeigt, dass vergleichbare Stahl-Festigkeitsträger der Festigkeitsklasse ST im Vergleich zur Festigkeitsklasse HT etwa 11% mehr Energie aufnehmen können und somit deutlich haltbarer im Einsatz in der Schutzlage sind und weniger zu Festigkeitsträgerbrüchen neigt.

Zweckmäßig ist es, wenn die Festigkeitsträger der Schutzlage Stahlkorde der Konstruktion 1 + N mit N=4 oder 5, bevorzugt mit N=5 sind.

Vorteilhaft ist es, wenn die Festigkeitsträger in der Schutzlage in einer Dichte von 20 bis 90 epdm, bevorzugt in einer Dichte von 25 bis 75 epdm, besonders bevorzugt in einer Dichte von 30 bis 70 epdm angeordnet sind. Hierdurch ist ein bester Kompromiss zwischen Reifenhaltbarkeit und Reifenrollwiderstand erhalten.

Zweckmäßig ist es, wenn der Filamentdurchmesser jedes Stahlfilament des Festigkeitsträgers in einem Bereich von 0,32 bis 0,40 mm, bevorzugt in einem Bereich von 0,32 bis 0,35 mm liegt. Hierdurch ist ein bester Kompromiss zwischen Reifenhaltbarkeit und Reifenrollwiderstand erhalten.

Vorteilhaft ist es, wenn jedes Stahlfilament des Festigkeitsträgers der Schutzlage den gleichen Filamentdurchmesser aufweist, wobei das Stahlfilament mit einem Filamentdurchmesser in einem Bereich von 0,30 bis 0,45 mm eine Bruchfestigkeit in einem Bereich von 235 bis 560 N, wobei das Stahlfilament mit einem Filamentdurchmesser in dem bevorzugten von 0,32 bis 0,40 mm eine Bruchfestigkeit in einem Bereich von 265 bis 455 N und wobei das Stahlfilament mit einem Filamentdurchmesser in dem besonders bevorzugten Bereich von 0,32 bis 0,35 mm eine Bruchfestigkeit in einem Bereich von 265 bis 360 N aufweist. Die nachfolgende Tabelle zeigt die vorbeschriebenen Bereiche der Filamentdurchmesser in Millimetern und die zugehörigen Bereiche der Bruchkraft in N. Hierdurch ist ein bester Kompromiss zwischen Reifenhaltbarkeit und Reifenrollwiderstand erhalten.

**Tabelle**

| Filamentdurchmesser (mm) | Bruchfestigkeit des Filamentes (N) |
|---|---|
| 0,30 - 0,45 | 235 - 560 |
| 0,32 - 0,40 | 265 - 455 |
| 0,32 - 0,35 | 265 - 360 |

In einer bevorzugten Ausführung der Erfindung sind die Festigkeitsträger der Schutzlage Korde der Konstruktion 1 x 0.35 ST + 5 x 0.35 ST oder Korde der Konstruktion 1 x 0.32 ST + 5 x 0.32 ST, welche vorzugsweise in einer Dichte zwischen 20 und 90 ends per decimeter (epdm) in der Schutzlage angeordnet sind.

Der Kord der Konstruktion 1 x 0.32 ST + 5 x 0.32 ST weist einen vergleichsweise nur sehr geringen Durchmesser von 0,96 mm auf. Trotz dieses geringen Durchmessers ist die absorbierte Energie zumindest gleich oder höher als diejenige eines dickeren Kordes einer niedrigeren Stahl-Festigkeitsklasse, wie beispielsweise der Konstruktion 1 x 0.40 HT + 5 x 0.40 HT mit einem Korddurchmesser von 1,2 mm. Durch den Einsatz von Festigkeitsträgern geringeren Durchmessers ist die Lagendicke der Schutzlage zu reduzieren, wodurch Kosten und Gewicht des Reifens bei gleicher oder höherer Festigkeit erhalten ist.

Andererseits ist es möglich, bekannte Kordkonstruktionen der Schutzlage mit Stahl der Festigkeitsklasse ST oder höher auszuführen, wodurch eine die Steinpenetration und Kordbrüche stärker verhindernde Schutzlage erhalten ist.

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig. 2 einen Teilquerschnitt durch die eine Hälfte eine Fahrzeugluftreifens im Bereich des Gürtels und des Laufstreifens;
Fig. 3 einen Querschnitt durch einen Stahlkord der Schutzlage des Reifens der Fig. 2.

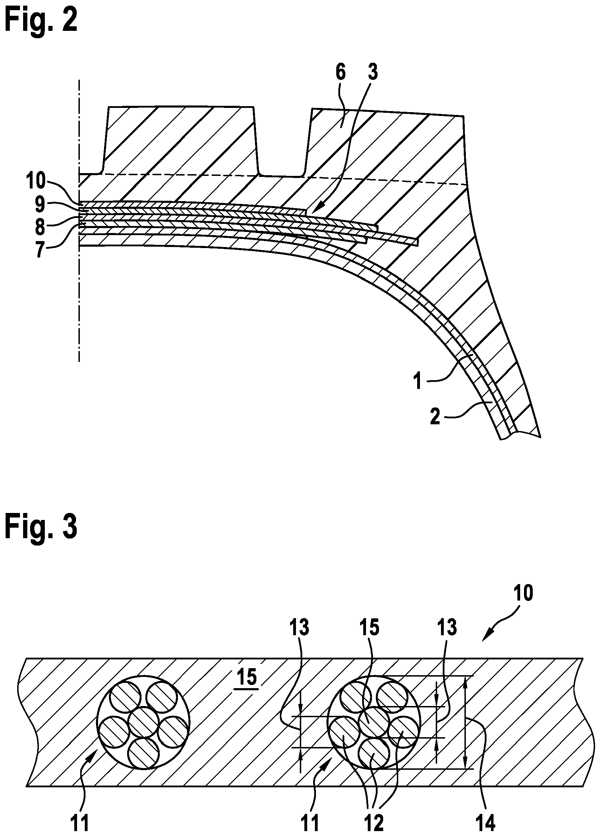

Fig. 2 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlkorden als Festigkeitsträger, einer luftdichten Innenschicht 2, einem mehrlagigen Gürtelpaket 3 und einem profilierten Laufstreifen 6.

Das Gürtelpaket 3 weist vier Gürtellagen 7, 8, 9 und 10 auf, wobei die vierte, radial äußerste Gürtellage die geringste Breite von allen Lagen aufweist und die sogenannte Schutzlage 10 bildet. Die erste Gürtellage ist die sogenannte Sperrlage 7, die zweite Gürtellage und die dritte Gürtellage sind die sogenannten Arbeitslagen 8, 9. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann ferner gleich breit wie die dritte Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlkord, wobei die Stahlkorde parallel zueinander und beabstandet voneinander angeordnet sind.

Die Fig. 3 zeigt einen Querschnitt durch die Schutzlage 10 des Reifens der Fig. 2. Die Schutzlage 10 weist Stahlkorde 11 der Festigkeitsklasse ST auf, welche in eine Gummimischung 15 eingebettet sind. Die Stahlkorde 11 sind parallel zueinander und beabstandet voneinander in dieser Schutzlage 10 angeordnet. Die Stahlkorde 11 weisen die Konstruktion 1 x 0.32 ST + 5 x 0.32 ST auf, was bedeutet, dass jeder Stahlkord 11 weist ein Kernfilament 15 des Durchmessers 13 von 0,32 mm aufweist, welches von 5 Filamenten des Durchmessers von 0,32 mm umgeben ist. Der Korddurchmesser 14 beträgt 0.96 mm. Die Festigkeitsträger 11 sind in einer Dichte in einem Bereich von 30 - 70 ends per decimeter (epdm) in der Schutzlage 10 angeordnet.

### Bezugszeichenliste

### (Teil der Beschreibung)

1 Karkasse
2 Innenschicht
3 Gürtelpaket
6 Laufstreifen
7 Sperrlage (1. Gürtellage)
8 Arbeitslage (2. Gürtellage)
9 Arbeitslage (3. Gürtellage)
10 Schutzlage (4. Gürtellage)
11 Festigkeitsträger / Stahlkord
12 Stahlfilament
13 Filamentdurchmesser
14 Korddurchmesser
15 Kernfilament

## Patentansprüche

1. Fahrzeugluftreifen in Radialbauart, insbesondere einen Nutzfahrzeugreifen, mit einem Gürtelpaket (3) aus wenigstens drei Lagen (8, 9, 10), nämlich zwei Arbeitslagen (8, 9) und einer radial außen in Bezug auf die Arbeitslagen (8, 9) angeordneten Schutzlage (10), wobei die Schutzlage (10) Festigkeitsträger (11) aus einem oder mehreren miteinander verseilten Stahlfilamenten (12) aufweist, wobei der Stahl der Stahlfilamente einer Festigkeitsklasse zuzuordnen ist,
**dadurch gekennzeichnet,**
**dass** jedes Stahlfilament (12) des Festigkeitsträgers (11) der Schutzlage (10) den gleichen Filamentdurchmesser (13) aufweist, wobei der Durchmesser (13) in einem Bereich von 0,30 bis 0,45 mm liegt, und der Stahl der Stahlfilamente (12) der Festigkeitsträger (11) der Schutzlage (10) der Festigkeitsklasse ST oder einer höheren Festigkeitsklasse zuzuordnen ist, wobei die Festigkeitsklasse ST eine Zugfestigkeit in MPa von 3980-2000*d und die Festigkeitsklasse UT eine Zugfestigkeit in MPa von 4400-2000*d aufweist, wobei d der Durchmesser eines Stahlfilamentes (12) in Millimetern ist.

2. Fahrzeugluftreifen nach Anspruch 1, **dadurch gekennzeichnet, dass** die Festigkeitsträger (11) der Schutzlage (10) Stahlkorde (11) der Konstruktion 1 + N mit N=4 oder 5, bevorzugt mit N=5 sind.

3. Fahrzeugluftreifen nach Anspruch 1 oder 2, **dadurch gekennzeichnet, dass** die Festigkeitsträger (11) in der Schutzlage (10) in einer Dichte von 20 bis 90 epdm, bevorzugt in einer Dichte von 25 bis 75 epdm, besonders bevorzugt in einer Dichte von 30 bis 70 epdm angeordnet sind.

4. Fahrzeugluftreifen nach einem oder mehreren der vorangehenden Ansprüche, **dadurch gekennzeichnet, dass** der Filamentdurchmesser (13)jedes Stahlfilaments (12) des Festigkeitsträgers (11) in einem Bereich von 0,32 bis 0,40 mm, bevorzugt in einem Bereich von 0,32 bis 0,35 mm liegt.

5. Fahrzeugluftreifen nach einem oder mehreren der vorangehenden Ansprüche, **dadurch gekennzeichnet, dass** jedes Stahlfilament (12) des Festigkeitsträgers (11) der Schutzlage (10) den gleichen Filamentdurchmesser (13) aufweist, wobei das Stahlfilament (12) mit einem Filamentdurchmesser (13) in einem Bereich von 0,30 bis 0,45 mm eine Bruchfestigkeit in einem Bereich von 235 bis 560 N, wobei das Stahlfilament (12) mit einem Filamentdurchmesser (13) in dem bevorzugten von 0,32 bis 0,40 mm eine Bruchfestigkeit in einem Bereich von 265 bis 455 N und wobei das Stahlfilament (12) mit einem Filamentdurchmesser (13) in dem besonders bevorzugten Bereich von 0,32 bis 0,35 mm eine Bruchfestigkeit in einem Bereich von 265 bis 360 N aufweist.

6. Fahrzeugluftreifen nach einem oder mehreren der vorangehenden Ansprüche, **dadurch gekennzeichnet, dass** die Festigkeitsträger (11) der Schutzlage (10) Stahlkorde (11) der Konstruktion 1 + 5 x 0.35 ST oder Korde der Konstruktion 1 + 5 x 0.32 ST sind, welche vorzugsweise in einer Dichte zwischen 30 und 90 ends per decimeter (epdm), bevorzugt in einer Dichte zwischen 30 und 70 epdm, besonders bevorzugt in einer Dichte zwischen 40 bis 60 epdm, in der Schutzlage (10) angeordnet sind.

## Claims

1. Pneumatic vehicle tire of radial type of construction, in particular a commercial vehicle tire, having a belt assembly (3) made up of at least three plies (8, 9, 10), namely two working plies (8, 9) and a protective ply (10) arranged radially on the outside with respect to the working plies (8, 9), wherein the protective ply (10) has reinforcing members (11) made up of one or more twisted-together steel filaments (12), wherein the steel of the steel filaments can be assigned to a strength class,
**characterized**
**in that** each steel filament (12) of the reinforcing member (11) of the protective ply (10) has the same filament diameter (13), wherein the diameter (13) lies in a range from 0.30 to 0.45 mm, and the steel of the steel filaments (12) of the reinforcing members (11) of the protective ply (10) can be assigned to the strength class ST or to a higher strength class, wherein the strength class ST has a tensile strength in MPa of 3980-2000*d and the strength class UT has a tensile strength in MPa of 4400-2000*d, wherein d is the diameter of a steel filament (12) in millimeters.

2. Pneumatic vehicle tire according to Claim 1, **characterized in that** the reinforcing members (11) of the protective ply (10) are steel cords (11) of the construction 1 + N, where N=4 or 5, preferably where N=5.

3. Pneumatic vehicle tire according to Claim 1 or 2, **characterized in that** the reinforcing members (11) are arranged in the protective ply (10) at a density of 20 to 90 epdm, preferably at a density of 25 to 75 epdm, particularly preferably at a density of 30 to 70 epdm.

4. Pneumatic vehicle tire according to one or more of the preceding claims, **characterized in that** the filament diameter (13) of each steel filament (12) of the reinforcing member (11) lies in a range from 0.32 to 0.40 mm, preferably in a range from 0.32 to 0.35 mm.

5. Pneumatic vehicle tire according to one or more of the preceding claims, **characterized in that** each steel filament (12) of the reinforcing member (11) of the protective ply (10) has the same filament diameter (13), wherein the steel filament (12) having a filament diameter (13) in a range from 0.30 to 0.45 mm has a breaking strength in a range from 235 to 560 N, wherein the steel filament (12) having a filament diameter (13) in the preferred range from 0.32 to 0.40 mm has a breaking strength in a range from 265 to 455 N, and wherein the steel filament (12) having a filament diameter (13) in the particularly preferred range from 0.32 to 0.35 mm has a breaking strength in a range from 265 to 360 N.

6. Pneumatic vehicle tire according to one or more of the preceding claims, **characterized in that** the reinforcing members (11) of the protective ply (10) are steel cords (11) of the construction 1 + 5 x 0.35 ST or cords of the construction 1 + 5 x 0.32 ST, which are arranged in the protective ply (10) preferably at a density of between 30 and 90 ends per decimeter (epdm), preferably at a density of between 30 and 70 epdm, particularly preferably at a density of between 40 to 60 epdm.

## Revendications

1. Pneumatique de véhicule de construction radiale, notamment un pneumatique de véhicule utilitaire, avec un paquet de ceinture (3) d'au moins trois couches (8, 9, 10), à savoir deux couches de travail (8, 9) et une couche de protection (10) agencée radialement à l'extérieur par rapport aux couches de travail (8, 9), la couche de protection (10) présentant des supports de résistance (11) en un ou plusieurs filaments d'acier (12) torsadés entre eux, l'acier des filaments d'acier devant être attribué à une classe de résistance,
**caractérisé en ce que**
chaque filament d'acier (12) du support de résistance (11) de la couche de protection (10) présente le même diamètre de filament (13), le diamètre (13) se situant dans une plage de 0,30 à 0,45 mm, et l'acier des filaments d'acier (12) des supports de résistance (11) de la couche de protection (10) devant être attribué à la classe de résistance ST ou à une classe de résistance plus élevée, la classe de résistance ST présentant une résistance à la traction en MPa de 3 980-2 000*d et la classe de résistance UT présentant une résistance à la traction en MPa de 4 400-2 000*d, d étant le diamètre d'un filament d'acier (12) en millimètres.

2. Pneumatique de véhicule selon la revendication 1, **caractérisé en ce que** les supports de résistance (11) de la couche de protection (10) sont des câbles en acier (11) de construction 1 + N avec N = 4 ou 5, de préférence avec N = 5.

3. Pneumatique de véhicule selon la revendication 1 ou 2, **caractérisé en ce que** les supports de résistance (11) sont agencées dans la couche de protection (10) avec une densité de 20 à 90 epdm, de préférence avec une densité de 25 à 75 epdm, de manière particulièrement préférée avec une densité de 30 à 70 epdm.

4. Pneumatique de véhicule selon une ou plusieurs des revendications précédentes, **caractérisé en ce que** le diamètre de filament (13) de chaque filament d'acier (12) du support de résistance (11) se situe dans une plage de 0,32 à 0,40 mm, de préférence dans une plage de 0,32 à 0,35 mm.

5. Pneumatique de véhicule selon une ou plusieurs des revendications précédentes, **caractérisé en ce que** chaque filament d'acier (12) du support de résistance (11) de la couche de protection (10) présente le même diamètre de filament (13), le filament d'acier (12) ayant un diamètre de filament (13) dans une plage de 0,30 à 0,45 mm présentant une résistance à la rupture dans une plage de 235 à 560 N, le filament d'acier (12) ayant un diamètre de filament (13) dans la plage préférée de 0,32 à 0,40 mm présentant une résistance à la rupture dans une plage de 265 à 455 N et le filament d'acier (12) ayant un diamètre de filament (13) dans la plage particulièrement préférée de 0,32 à 0,35 mm présentant une résistance à la rupture dans une plage de 265 à 360 N.

6. Pneumatique de véhicule selon une ou plusieurs des revendications précédentes, **caractérisé en ce que** les supports de résistance (11) de la couche de protection (10) sont des câbles en acier (11) de la construction 1 + 5 x 0,35 ST ou des câbles de la construction 1 + 5 x 0,32 ST, qui sont de préférence agencés dans la couche de protection (10) avec une densité comprise entre 30 et 90 extrémités par décimètre (epdm), de préférence avec une densité comprise entre 30 et 70 epdm, de manière particulièrement préférée avec une densité comprise entre 40 et 60 epdm.
